# EUROPÄISCHE PATENTANMELDUNG

(11) **EP 1 775 571 A2**
(43) Veröffentlichungstag der Anmeldung: **18.04.2007**
(21) Anmeldenummer: 06020943.4
(22) Anmeldetag: 05.10.2006
(51) Int. Cl.: G01N 15/02

(54) **Vorrichtung und Verfahren zur Überwachung der Partikelfracht eines Fluids**

(30) Priorität: 14.10.2005 DE 102005049227
(71) Anmelder: Fraunhofer-Gesellschaft zur Förderung der angewandten Forschung e.V., 80686 München (DE)
(72) Erfinder: Grimme, Ralf, Dipl.-Ing.(FH), 74385 Pleidelsheim (DE); Rochowicz, Markus, Dipl.-Phys., 71069 Sindelfingen (DE)
(74) Vertreter: Pfenning, Meinig & Partner GbR

(57) **Zusammenfassung**

Die vorliegende Erfindung betrifft eine Vorrichtung zur Überwachung der Partikelfracht eines Fluids. Derartige Vorrichtungen werden insbesondere zur Bestimmung der Partikelfracht von Flüssigkeiten oder Gasen benötigt, beispielsweise bei der Prozessführung von Reinigungs- und/oder Spülbädern, bei der Qualitätsüberwachung von Reinigungsvorgängen, bei der Bestimmung der technischen Sauberkeit bzw. Partikelbeladung von Bauteilen, insbesondere in der Fertigungs- und Produktionstechnik, wie beispielsweise der Automobilindustrie. Die erfindungsgemäße Vorrichtung (1) zur Überwachung der Partikelfracht eines Fluids (12) weist eine Messkammer (2) mit einem Einlauf (3) und einem Auslauf (4) für das Fluid (12) auf. Sie ist gekennzeichnet durch ein in der Messkammer (2) zwischen dem Einlauf (3) und dem Auslauf (4) angeordnetes Partikelsieb (10) zum Zurückhalten von Partikeln, deren Größe größer oder gleich einer vorbestimmten Mindestgröße ist, wobei das Partikelsieb (10) die Messkammer (2) in eine erste Teilkammer (5) zwischen dem Einlauf (2) und dem Partikelsieb (10) und eine zweite Teilkammer (6) zwischen dem Partikelsieb (10) und dem Auslauf (6) unterteilt, mindestens eine in Messkammer (2) angeordnete Beleuchtungsvorrichtung (7) zur Beleuchtung des Parcikelsiebes (10), sowie mindestens eine in Messkammer (2) angeordnete Bildaufnahmevorrichtung (8) zur Erfassung eines Abbildes des Partikelsiebes (10).

## Beschreibung

Die vorliegende Erfindung betrifft eine Vorrichtung zur Überwachung der Partikelfracht eines Fluids. Derartige Vorrichtungen werden insbesondere zur Bestimmung der Partikelfracht von Flüssigkeiten oder Gasen benötigt, beispielsweise bei der Prozessführung von Reinigungs- und/oder Spülbädern, bei der Qualitätsüberwachung von Reinigungsvorgängen, bei der Bestimmung der technischen Sauberkeit bzw. Partikelbeladung von Bauteilen, insbesondere in der Fertigungs- und Produktionstechnik, wie beispielsweise der Automobilindustrie.

Im Maschinenbau und der Automobilfertigung muss zunehmend darauf geachtet werden, dass die verarbeiteten Bauteile frei von Partikeln und Spänen sind, welche zur Beeinträchtigung oder Beschädigung von funktions- oder sicherheitsrelevanten Systemkomponenten führen können. Im Gegensatz zur Halbleitertechnik sind hier noch keine Partikelgrößen im sub-µm-Bereich, sondern im 50- bis 100-µm-Bereich von Interesse. Vor allem Partikel aus harten Materialien, wie Metalle oder Sand, müssen effektiv von den Bauteilen entfernt werden. Dies geschieht vor allem in Anlagen, in welchen mittels Tauch- und Spritzverfahren die oftmals kompliziert geformten Fräs- und Drehteile bzw. spanend bearbeitete Metallgussteile gereinigt werden. In Ermangelung geeigneter fertigungsintegrierbarer Überwachungstechniken kommt es in diesen Anlagen jedoch häufig zu einer Aufkonzentration von Partikeln und damit zu einer Verschlechterung der Reinigungsleistung. Durch stichprobenartige manuelle Prüfungen der Bauteile lassen sich die Folgen zwar einschränken, allerdings nicht lückenlos und nur mit sehr hohem Aufwand.

Es sind bereits verschiedene Verfahren bekannt, um die Partikelbeladung von Bauteilen oder auch Reinigungsbädern zu überwachen.

Zum einen kann die zu untersuchende Flüssigkeit durch eine Lichtschranke geführt werden. Befinden sich Partikel in der Flüssigkeit, so beschatten diese den Lichtempfänger. Über die hierbei sinkende Lichtintensität wird dann auf die vorliegende Partikelgröße geschlossen.

Dieses Verfahren hat verschiedene Nachteile. So wird beispielsweise keine echte Messung der Länge der Partikel, sondern eine Messung einer Änderung einer Lichtintensität vorgenommen. Es ermöglicht ebenfalls nicht einen bestimmten Partikel reproduzierbar zu vermessen, da insbesondere Lageänderungen der Partikel das Messergebnis beeinflussen. Beispielsweise können sich die Partikel in der Flüssigkeit drehen, wodurch zum Zeitpunkt der Messung u.U. die schmale Seite des Partikels erfasst wird. Weiterhin müssen die Partikel einzeln in die Messzelle gelangen, wodurch der vermessbare Volumenstrom und die maximal zulässige Partikelkonzentration stark beschränkt werden. Niedrige Volumenströme führen jedoch zu Sedimentation von großen Partikeln, so dass diese u.U. gar nicht erst in die Messzelle gelangen.

Weiterhin ist keine Einschränkung auf eine definierte Partikelmindestgröße möglich, da alle Partikel in der Flüssigkeit vermessen werden. Obendrein werden zusätzlich zu den Partikeln auch Gasblasen im Medium erfasst, die dann die Messung erheblich verfälschen.

Bei einem zweiten Prinzip werden die zu vermessenden Partikel in dem Fluidstrom durch eine Lichtschranke geleitet. Über das Zeitfenster der Abschattung und die Strömungsgeschwindigkeit der Flüssigkeit wird auf die vorliegende Partikelgröße geschlossen. Auch dieses Verfahren unterliegt sämtlichen Nachteilen, die beim vorhergehenden Verfahren bereits genannt wurden.

Eine dritte Möglichkeit ist es, die zu untersuchende Flüssigkeit durch einen Lichtstrahl zu führen und das durch die vorhandenen Partikel gestreute Licht zu vermessen. Auch dieses Verfahren hat den Nachteil, dass Luft oder Gasblasen nicht von echten Partikeln unterschieden werden können. Obendrein korreliert der Streuquerschnitt der Partikel nicht unmittelbar mit der Partikelgröße, so dass die reale Partikelgröße von der gemessenen Partikelgröße sehr stark abweichen kann. Auch hier beeinflusst die Partikellage in der Messzelle das Messergebnis sehr stark, so dass auch keine reproduzierbare Messung möglich ist. Dies folgt auch daraus, dass die Partikel nach der Messung sich nicht mehr in der Messzelle befinden und so für eine weitere Messung nicht nochmals zur Verfügung stehen.

Ein weiteres Verfahren versucht über eine Bildauswertung die genauen Größen der Partikel zu erfassen. Hierdurch wird die zu untersuchende Flüssigkeit durch eine transparente Messzelle geleitet und stroposkopisch beleuchtet. Mit einer CCD-Kamera werden Bilder aufgenommen und die abgebildeten Partikel über ein Bildauswerteverfahren vermessen.

Dieses Verfahren eignet sich nicht für einen Einzelpartikelnachweis, da prinzipbedingt einzelne Partikel durch die Messzelle gelangen können, ohne durch eine Stroposkopbeleuchtung erfasst zu werden.

Auch hier beeinflusst die Partikellage in der Messzelle das Messergebnis und die Messung ist nicht reproduzierbar, da die vermessenen Partikel nicht nochmals für eine Messung zur Verfügung stehen.

Bei einem weiteren Verfahren nach dem Stand der Technik wird die zu untersuchende Flüssigkeit über ein Sieb geleitet. Dieses Sieb filtert sämtliche Partikel in der Flüssigkeit heraus, so dass diese am Sieb zurückgehalten werden. Bei zunehmender Belegung des Siebes mit zurückgehaltenen Partikeln steigt der Differenzdruck über das Sieb, der über Drucksensoren ermittelt wird. Aus dem Druckanstieg wird dann auf die Größe der abgeschiedenen Partikel geschlossen.

Die Korrelation zwischen Differenzdruck und Partikelgröße ist jedoch nicht eindeutig, da die Partikelform entscheidend den hydrodynamischen Widerstand beeinflusst, so dass bei gleicher Partikellänge sehr unterschiedliche Druckdifferenzen gemessen werden können. Weiterhin ist auch hier eine reproduzierbare bzw. wiederholte Messung nicht möglich, da die einmal durch einen Partikel erzeugte Druckstufe nicht noch einmal erzeugt werden kann. Auch eine visuelle Kontrolle des Messergebnisses ist nicht möglich.

Der vorliegenden Erfindung am nächsten kommt das im folgenden dargestellte Verfahren nach dem Stand der Technik.

Hierbei wird die zu untersuchende Flüssigkeit durch ein Partikelsieb gefiltert, der Filter getrocknet und die auf dem Filter abgeschiedenen Partikel gewogen oder mittels Bildverarbeitung vermessen.

Dies hat jedoch den Nachteil, dass vor jeder Auswertung einer Messung der Filter aus dem Gerät entnommen werden muss, so dass eine Onlineerfassung nicht möglich ist. Dieses Verfahren eignet sich daher lediglich für Stichprobenmessungen und wenn eine große Zeitdifferenz zwischen Probennahme und dem Vorliegen des Analyseergebnisses nicht wesentlich ist. Weiterhin besteht die Gefahr, dass das Partikelsieb bei der Entnahme, beim Transport oder bei der Analyse durch Partikelschmutz aus der Umgebung weiter verunreinigt wird und damit das Messergebnis verfälscht wird. Dieses Verfahren erfordert viel manuelle Labortätigkeit und daher gut ausgebildetes Personal. Es ist nicht nur zeit- sondern auch kostenaufwendig.

Die vorliegende Erfindung macht es sich daher ausgehend von diesem Stand der Technik zur Aufgabe, eine Vorrichtung zur Überwachung der Partikelfracht eines Fluids und ein entsprechendes Verfahren zur Verfügung zu stellen, mit denen eine genaue, rasche und ohne Zeitverzögerung durchzuführende Messung der Partikelbeladung eines Fluids möglich ist.

Diese Aufgabe wird durch die Vorrichtung nach Anspruch 1 sowie das Verfahren nach Anspruch 17 gelöst. Vorteilhafte Weiterbildungen der erfindungsgemäßen Vorrichtung und des erfindungsgemäßen Verfahrens sind in den jeweiligen abhängigen Ansprüchen beschrieben. Anspruch 25 gibt Verwendungen für die erfindungsgemäße Vorrichtung und das erfindungsgemäße Verfahren an.

Die erfindungsgemäße Vorrichtung zur Überwachung der Partikelfracht eines Fluids weist eine Messkammer auf, die von dem Fluid durchflossen wird. In der Messkammer ist ein Partikelsieb angeordnet, dessen Maschenweite bzw. Porengröße so gewählt ist, dass Partikel mit einer Größe oberhalb einer vorbestimmten Mindestgröße zurückgehalten werden. Hierdurch ist es möglich, bei der Messung Partikel, die eine bestimmte Mindestgröße nicht erreichen, zu vernachlässigen. Sollen jedoch alle Partikel erfasst werden, so kann die Mindestgröße bzw. die Porengröße des Partikelsiebes entsprechend klein gewählt werden.

In der Messkammer ist weiterhin eine Beleuchtungsvorrichtung angeordnet, die das Partikelsieb beleuchtet. Das beleuchtete Partikelsieb wird dann über eine Bildaufnahmevorrichtung, beispielsweise eine CCD-Kamera abgebildet und anschließend online an eine Bildverarbeitungsvorrichtung übertragen. Diese wertet das so erzeugte Bild aus und analysiert es auf abgebildete Partikel und deren Charakteristika.

Die erfindungsgemäße Messkammer ermöglicht also ein gleichzeitiges Filtrieren und Auswerten und damit eine sehr rasche Analyse. Die Vorteile des zuletzt beschriebenen Verfahrens nach dem Stand der Technik sind vollständig erhalten, beispielsweise eine exakte geometrische Vermessung der Partikel, beispielsweise ihrer maximalen Ausdehnung oder Form. Die Vermessung der Partikel kann auch wiederholt werden und ist damit reproduzierbar.

Das erfindungsgemäße Verfahren hat weiterhin den Vorteil, dass die Messung nicht durch Gasblasen in der Flüssigkeit gestört wird und ein kontinuierlicher Messbetrieb ermöglicht wird. Hierzu kann beispielsweise das Sieb automatisch regeneriert werden, beispielsweise durch Rückspülung oder Filtertransport oder -austausch.

Die erfassten Partikel können ggf. für weitere Untersuchungen gemäß dem zuletzt im Stand der Technik beschriebenen Verfahren auch aus dem Messsystem entnommen werden. Dies ist jedoch nicht zwingend erforderlich.

Das erfindungsgemäße Verfahren ermöglicht damit die visuelle Beurteilung der gesammelten Partikel. Durch geeignete Beleuchtung, die auch zusätzlich erfolgen kann, beispielsweise UV-Licht, sichtbares Licht im Auflicht oder sichtbares Licht in Durchlicht, ist es auch möglich, weitere Partikelcharakteristika, wie beispielsweise Farbe, Material, Fluoreszenz- oder Polarisationseigenschaften zu erfassen.

Im folgenden werden nun einige Beispiele erfindungsgemäßer Vorrichtungen und Verfahren beschrieben.

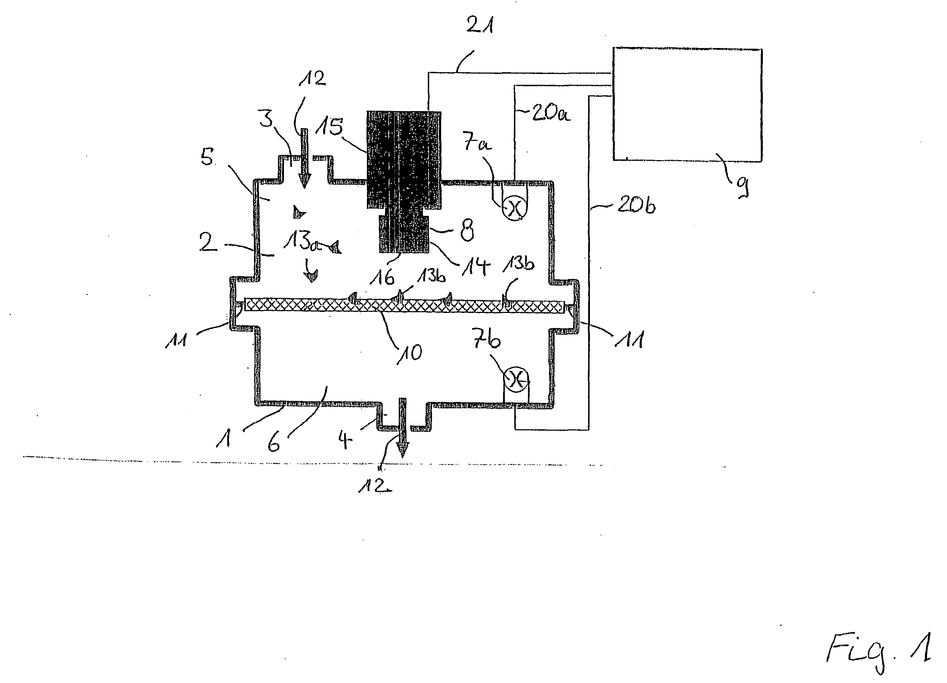

Es zeigen die Figuren 1 bis 3 den Einsatz erfindungsgemäßer Vorrichtungen zur Überwachung der Partikelfracht von Fluiden. Dabei werden in sämtlichen Figuren für gleiche oder ähnliche Elemente gleiche oder ähnliche Bezugszeichen verwendet.

Figur 1 zeigt nun eine Vorrichtung 1, die eine Messkammer 2 aufweist. Diese Messkammer 2 besitzt einen Fluideinlass 3 und einen Fluidauslass 4. Zwischen dem Einlass 3 und dem Auslass 4 ist ein Partikelsieb 10 angeordnet, wobei dieses im vorliegenden Beispiel seitlich über Dichtungen 11 mit der Wand der Kammer 2 abdichtend angeordnet ist. Das durch den Einlass 3 in die Kammer 2 einströmende Fluid 12 wird daher gezwungen, durch das Partikelsieb 10 zu strömen, um anschließend den Auslass 4 zu erreichen. Dabei werden auf dem Partikelsieb 10 in dem Fluid 12 befindliche Partikel 13a abgeschieden und stehen so als abgeschiedene Partikel 13b für die weitere Messung zur Verfügung.

Das Partikelsieb 10 unterteilt die Messkammer 2 in eine erste Teilkammer 5 und eine zweite Teilkammer 6, die vor bzw. nach dem Partikelsieb angeordnet sind. In der ersten Teilkammer 5 befindet sich nun eine Lampe 7a als Beleuchtungsvorrichtung sowie eine Bildaufnahmevorrichtung 8 mit einer Projektionsoptik 14 und einer CCD-Kamera 15. Die Projektionsanordnung 14 ist über ein Messfenster 16 zu der fluiddurchströmten ersten Kammer 5 abgeschlossen. Dieses Messfenster 16 kann ggf. durch ebenfalls in der Kammer angeordnete, jedoch nicht dargestellte, Reinigungsvorrichtungen, wie beispielsweise elektrisch betätigbare Bürsten oder Wischer von Zeit zu Zeit gereinigt werden.

Durch die Lampe 7a erfolgt nun eine Auflichtbeleuchtung der auf dem Partikelsieb 10 abgeschiedenen Partikel 13b. In der zweiten Teilkammer 6 ist ebenfalls eine Beleuchtungsvorrichtung 7b (Lampe) angeordnet, die das Partikelsieb 10 von der Kamera 15 aus gesehen rückwärtig, also im Durchlicht, beleuchtet.

Die Lampen 7a und 7b sind über Leitungen 20a und 20b mit einer Bildauswertevorrichtung bzw. einem Computer 9 verbunden. Auch die Kamera 15 ist über eine Leitung 21 mit dem Computer 9 verbunden, um an diesen die aufgenommenen Bilder des Partikelsiebes 10 zu übertragen.

Wird nun die Messkammer 2 von einem Fluid 12 durchströmt, so lagern sich die Partikel 13b auf dem Partikelsieb 10 ab, die eine Größe aufweisen, die größer ist als die Porenweite des Partikelsiebs 10. Diese werden nun beleuchtet und ein speicherbares, digitales Bild hiervon durch die Kamera 15 aufgenommen und an die Bildauswertevorrichtung 9 gesandt. In dieser erfolgt nun eine Bildauswertung bezüglich der Partikelgröße und weiterer Eigenschaften der Partikel. Beispielsweise kann eine der Lampen 7a und 7b eine UV-Lichtquelle sein, so dass Fluoreszenzeigenschaften der Partikel 13b erfasst werden können. Weiterhin ist es möglich, dass eine dieser Lampen 7a und 7b polarisiertes Licht aussendet und so die Polarisationseigenschaften der Partikel 13b erfasst werden. Hierdurch ist es möglich, die Materialeigenschaften der abgeschiedenen Partikel 13b zu erfassen. Im folgenden sollen weitere Möglichkeiten der Messung mit dem erfindungsgemäßen Messsystem und dem erfindungsgemäßen Messverfahren dargestellt werden:

### Einzelpartikelmessung und integrale Partikelerfassung

Je nach Zielsetzung kann das Messsystem so eingestellt werden, dass jeder einzelne Partikel zeitnah nach der Abscheidung auf dem Sieb erfasst oder nach definierten Zeitintervallen die Belegung des Siebes untersucht wird.

### Partikelcharakterisierung über Formanalysen

Da die Partikel auf dem Sieb (Filter) abbildend erfasst werden, ist die Analyse der Partikelform möglich. Über die Form kann unter Umständen auf die Herkunft oder das Material der Partikel (Späne) geschlossen werden.

### Analytische Untersuchung von Partikel

Die auf dem Sieb gesammelten Partikel besitzen eine Größe, welche in der jeweiligen Anwendung als kritisch anzusehen sind. Deshalb kann eine nähere Untersuchung der Partikel mit analytischen Methoden von Interesse sein. Damit dies möglich ist, wird das Sieb (Filter) so in der Messkammer angeordnet, dass es einfach zu entnehmen ist.

### Auflicht- und Durchlichtbeleuchtung

Je nach Anwendungsfall kann es zweckdienlich sein, die für die Bildaufnahme erforderliche Beleuchtung von der Kameraseite (Auflicht) oder unterhalb des Siebes (Filters) aufzubringen (Durchlicht). Das Messsystem kann auch beide Beleuchtungsmethoden zur Verfügung stellen.

### Trübungsmessung

Oftmals werden die Reinigungsflüssigkeiten in Reinigungsanlagen in einem geschlossenen Kreislauf umgewälzt. Hierbei kann es zur Aufkonzentration von Partikeln kommen, welche durch die eingesetzten Filtersysteme nicht zurückgehalten werden. Diese Aufkonzentration führt zu einer zunehmenden Trübung des Reinigungsmediums. Mit Hilfe des Messsystems kann diese Aufkonzentration erfasst und überwacht werden. Hierzu wird ein Bild des sauberen Siebes (Filters) bei definierter Beleuchtung aufgenommen und hinsichtlich seiner Helligkeit ausgewertet. Ändert sich die integrale Helligkeit über ein zulässiges Maß hinaus, ist die Aufkonzentration kleiner Partikel zu groß und Abhilfemaßnahmen (z.B. Einschalten einer Zusatzfilterung oder Medientausch) können eingeleitet werden.

### Materialanalyse mittels Fluoreszenzauswertung

Neben der Partikelgröße kann in bestimmten Anwendungen auch die Erfassung des Partikelmaterials von Interesse sein. Sollte das zu erfassende Material zur Fluoreszenz anregbar sein, kann das Messsystem durch zusätzlich Beleuchtungssysteme und optische Filter erweitert werden.

### Materialanalyse mittels Polfiltereinsatz

Eine weitere Methode zur Bestimmung der Partikelmaterialien basiert auf dem Einsatz von Polarisationsfiltern im abbildenden oder beleuchtenden System. Liegen auf dem Sieb Metallpartikel, so reflektieren diese das Licht der Beleuchtung sehr stark. Werden die Polfilter um 90° gegeneinander verdreht, so verschwinden diese Reflexionen. Mittels einer Differenzbildaufnahme kann somit ermittelt werden, welche Partikel metallischen Ursprungs sind und welche nicht.

### Messfensterreinigung

Sobald in trüben und verunreinigten Flüssigkeiten gemessen wird, besteht die Gefahr, dass das Messfenster, welches die Optik vom Flüssigkeitsvolumen trennt, verunreinigt wird. Diese Verunreinigung behindert unter Umständen die Messung der Partikelgrößen, so dass diese entfernt oder verhindert werden muss. Zur Vermeidung der Ablagerung stehen unter anderem folgende Methoden zur Verfügung:
- Beschichtung der Messfenster mit Antihaftbelägen
- Umströmung der Messfenster mit sauberen Medien

Sollten diese Maßnahmen nicht ausreichend sein, können aktive Systeme vorgesehen werden, welche die Messfenster reinigen (Bürsten, Wischer).

Das erfindungsgemäße Messsystem ist dabei für jede Art von Fluiden geeignet und ermöglicht die Partikelmessung in Luft, Gasen oder Flüssigkeiten.

Wird der Belegungsgrad des Siebes zu groß, so besteht die Gefahr, dass sich die Partikel sehr dicht nebeneinander oder übereinander abscheiden und dadurch das rechnergestützte Auswertesystem 9 die einzelnen Partikel nicht mehr voneinander trennen kann. Dies würde zu Messfehlern führen. Es ist also erforderlich, dass das Sieb vor Erreichen dieses Belegungszustandes regeneriert wird.

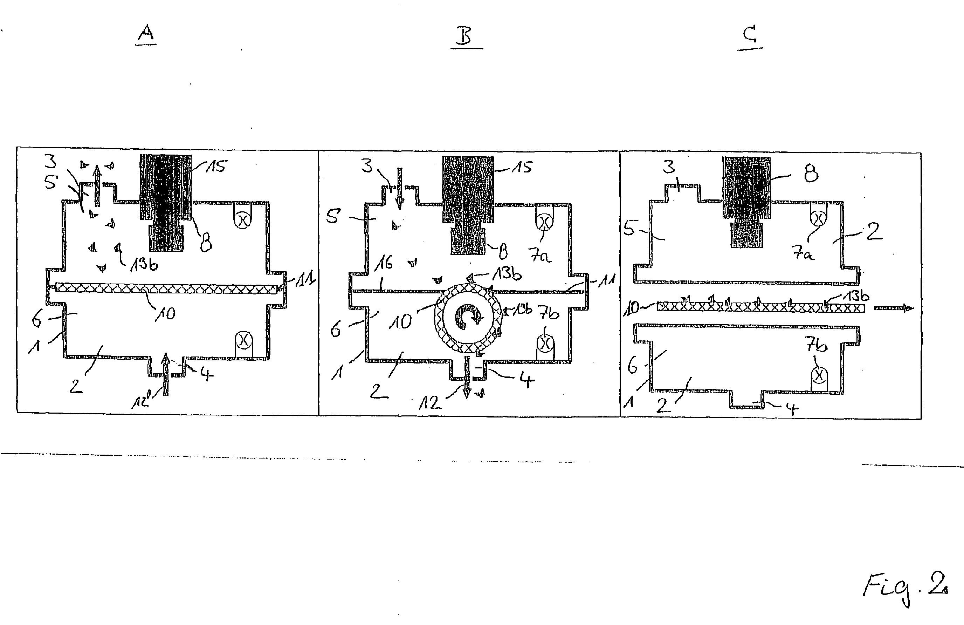

Wie in Figur 2A dargestellt, kann die Regeneration durch Rückspülung der Kammer 2 erfolgen. Hierzu wird durch den Einlass 4 ein partikelfreies Fluid 12' eingeleitet und durch das Partikelsieb (Filter) 10 geleitet. Es nimmt dabei die Partikel 13b, die auf dem Sieb 10 abgeschieden waren, mit sich und verlässt die Messkammer durch den Einlass 3.

Eine zweite Möglichkeit für die Vermeidung einer Überbelegung oder eines Zusetzens des Partikelsiebes 10 wird in Figur 2B gezeigt. Hier wird der jeweils verwendete Filter zyklisch ausgetauscht, wodurch jeweils für die Ablagerung der Partikel 13b ein frischer und freier Partikelbereich zur Verfügung steht. Hierzu ist der Filter 10 auf einem Zylinder angeordnet, dessen Drehachse sich senkrecht zur Zeichnungsebene in Figur 2B befindet. Der der Kamera 15 zugewandte Bereich des Filters erstreckt sich dabei in die erste Teilkammer 5 und wird zur Abscheidung von Partikeln 13b verwendet. Wird das Sieb 10 weitergedreht, so gerät der partikelbeladene Bereich des Siebes 10 in die zweite Teilkammer, wo er durch das abströmende Fluid 12 von den Partikeln 13b freigespült wird. Anschließend gelangt er durch weiteres Drehen des Zylinders und des zylinderförmigen Partikelsiebes 10 wiederum in die erste Teilkammer und kann so erneut zur Abscheidung von Partikeln 13b verwendet werden.

Figur 2C zeigt eine durchaus herkömmliche Methode, um das Partikelsieb zu erneuern. Hierzu besteht die Messkammer 2 aus zwei Hälften, die die erste Teilkammer 5 bzw. die zweite Teilkammer 6 umfassen. Diese werden zum Austausch des Filter 10 voneinander getrennt, der Filter entnommen und ein frischer, sauberer Filter eingelegt. Anschließend werden die beiden Hälften 5 und 6 wieder miteinander verbunden.

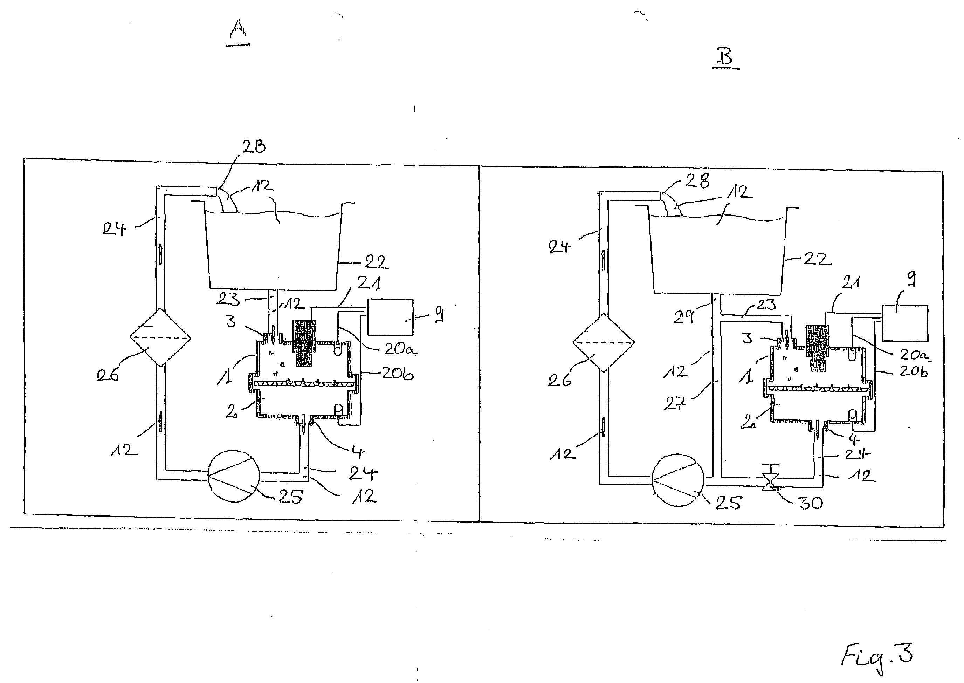

Figur 3 zeigt den Einsatz einer erfindungsgemäßen Vorrichtung zur Überwachung der Partikelfracht eines Fluides in einem Fluidsystem. Hierbei wird eine Flüssigkeit 12 in einem Behälter 22 aufgefangen. Diese wird zur Überwachung über eine Zuleitung 23 zum Einlauf 3 der Vorrichtung 1 geleitet. Sie verlässt dann anschließend über eine Rückleitung 24 die Überwachungsvorrichtung 1 und wird zurück über einen Auslass 28 in den Behälter 22 geleitet. In der Leitung 24 befindet sich weiterhin noch eine Pumpe 25 zur Förderung der Flüssigkeit 12 sowie ein Reinigungsfilter 26 zur Aufbereitung der Flüssigkeit.

Der mit der Flüssigkeit angestrebte technische Prozess kann dabei in dem Bad 22 ablaufen. In diesem Falle handelt es sich also um ein Fluidmesssystem, das im Vollvolumenstrom angeordnet ist. Figur 3B zeigt im Gegensatz zur Figur 3A die Anordnung der Messkammer 2 im Bypass. Hier wird die Flüssigkeit 12 bei ansonsten gleicher Konfiguration der Gesamtanlage wie in Figur 3A über ein gemeinsames Leitungsstück 29 aus dem Behälter 22 abgeleitet, das sich dann anschließend in eine Leitung 27 zur Durchleitung der Flüssigkeit und einen Bypass 23 zur Ableitung eines geringen Teils der Flüssigkeit zum Einlauf 3 der Messkammer 2 aufteilt. Die Rückleitung 24 aus der Messkammer 2 führt dann wieder zurück zu der Leitung 27 und wird mit dieser noch vor der Pumpe 25 zusammengeführt. In der Leitung 24 noch vor diesem Zusammenführungspunkt befindet sich eine Drossel oder ein Stellventil 30, mit dem der Fluidstrom durch die Messkammer 2 eingeregelt werden kann.

In beiden Einbauvarianten kann das Messsystem das Auftreten von Partikeln, welche eine kritische Größe überschreiten, erfassen. Befinden sich Partikel im Kreislaufsystem, welche kleiner sind als die kritische Größe, so passieren diese das Sieb und werden deshalb von der Kamera nicht erfasst. Größere Partikel bleiben am Sieb zurück und werden deshalb vom Kamerasystem erfasst und mittels Bildverarbeitung vermessen.

Die so ermittelten Messwerte können zur Dokumentation der Reinheit, der Steuerung von Anlagenfunktionen oder zur Aussonderung von besonders verunreinigten Bauteilen herangezogen werden.

## Patentansprüche

1. Vorrichtung (1) zur Überwachung der Partikelfracht eines Fluids (12) mit einer Messkammer (2) mit einem Einlauf (3) und einem Auslauf (4) für das Fluid (12),
**gekennzeichnet durch,**
ein in der Messkammer (2) zwischen dem Einlauf (3) und dem Auslauf (4) angeordnetes Partikelsieb (10) zum Zurückhalten von Partikeln, deren Größe größer oder gleich einer vorbestimmten Mindestgröße ist,
wobei das Partikelsieb (10) die Messkammer (2) in eine erste Teilkammer (5) zwischen dem Einlauf (2) und dem Partikelsieb (10) und eine zweite Teilkammer (6) zwischen dem Partikelsieb (10) und dem Auslauf (6) unterteilt,
mindestens eine in Messkammer (2) angeordnete Beleuchtungsvorrichtung (7) zur Beleuchtung des Partikelsiebes (10), sowie
mindestens eine in Messkammer (2) angeordnete Bildaufnahmevorrichtung (8) zur Erfassung eines Abbildes des Partikelsiebes (10).

2. Vorrichtung (1) nach einem der vorhergehenden Ansprüche, **dadurch gekennzeichnet, dass** das Partikelsieb (10) austauschbar und/oder in der Messkammer (2) regenerierbar ist.

3. Vorrichtung (1) nach einem der vorhergehenden Ansprüche, **dadurch gekennzeichnet, dass** die mindestens eine Beleuchtungsvorrichtung (7) derart angeordnet ist, dass das Partikelsieb (10) bezogen auf die Position der mindestens einen Bildaufnahmevorrichtung (8) im Auflicht (7a) und/oder im Durchlicht (7b) beleuchtbar ist.

4. Vorrichtung (1) nach einem der vorhergehenden Ansprüche, **dadurch gekennzeichnet, dass** durch die mindestens eine Beleuchtungsvorrichtung (7) und gegebenenfalls weitere Beleuchtungsvorrichtungen farbiges sichtbares Licht, ultraviolettes Licht und/oder polarisiertes Licht erzeugbar ist.

5. Vorrichtung (1) nach einem der vorhergehenden Ansprüche, **dadurch gekennzeichnet, dass** die mindestens eine Bildaufnahmevorrichtung (8) und gegebenenfalls weitere Bildaufnahmevorrichtungen eine Kamera (15) aufweisen.

6. Vorrichtung (1) nach dem vorhergehenden Anspruch, **dadurch gekennzeichnet, dass** die Kamera (15) eine CCD-Kamera ist.

7. Vorrichtung (1) nach einem der beiden vorhergehenden Ansprüche, **dadurch gekennzeichnet, dass** die mindestens eine Bildaufnahmevorrichtung (8) und gegebenenfalls weitere Bildaufnahmevorrichtungen zwischen dem Partikelsieb (10) und der Kamera (15) eine Abbildungsoptik (14) aufweisen.

8. Vorrichtung (1) nach einem der vorhergehenden Ansprüche, **dadurch gekennzeichnet, dass** die Bildaufnahmevorrichtung (8) ein Messfenster (16) aufweist, das die Messkammer (2) von der Bildaufnahmevorrichtung (8) trennt.

9. Vorrichtung (1) nach dem vorhergehenden Anspruch, **dadurch gekennzeichnet, dass** das Messfenster (16) auf seiner der Messkammer (2) zugewandten Oberfläche zumindest bereichsweise eine Antihaftbeschichtung aufweist.

10. Vorrichtung (1) nach einem der beiden vorhergehenden Ansprüche, **dadurch gekennzeichnet, dass** das Messfenster (16) von einem zumindest weitgehend partikelfreien Medium umströmbar ist.

11. Vorrichtung (1) nach einem der drei vorhergehenden Ansprüche, **dadurch gekennzeichnet, dass** in der Messkammer (2) mindestens eine Reinigungsvorrichtung zur mechanischen Reinigung der der Messkammer zugewandten Oberfläche des Messfensters (16) angeordnet ist.

12. Vorrichtung (1) nach dem vorhergehenden Anspruch, **dadurch gekennzeichnet, dass** die Reinigungsvorrichtung eine Bürste zum Abbürsten und/oder einen Wischer zum Abwischen er der Messkammer zugewandten Oberfläche des Messfensters aufweist.

13. Vorrichtung (1) nach einem der beiden vorhergehenden Ansprüche, **dadurch gekennzeichnet, dass** die Reinigungsvorrichtung elektrisch betätigbar ist.

14. Vorrichtung (1) nach einem der vorhergehenden Ansprüche, **dadurch gekennzeichnet, dass** durch die mindestens eine Bildaufnahmevorrichtung (8) und gegebenenfalls weitere Bildaufnahmevorrichtungen ein digital speicherbares Bild erzeugbar ist und die mindestens eine Bildaufnahmevorrichtung bzw. die weiteren Bildaufnahmevorrichtungen zur Übertragung des digital speicherbaren Bildes mit einer Bildverarbeitungsvorrichtung (9) zur Verarbeitung des digital speicherbaren Bildes verbunden sind.

15. Vorrichtung (1) nach dem vorhergehenden Anspruch, **dadurch gekennzeichnet, dass** durch die mindestens eine Bildverarbeitungsvorrichtung (9) und gegebenenfalls weitere Bildverarbeitungsvorrichtungen Anzahl, Größe, Form, maximale Länge, maximale Breite, Verhältnis zwischen Breite und Länge, Rundheitsgrad, Farbe, Fluoreszenzeigenschaften, Polarisationseigenschaften und/oder Material der auf dem Partikelsieb abgeschiedenen Partikel (13b) bestimmbar ist.

16. Vorrichtung (1) nach dem vorhergehenden Anspruch, **dadurch gekennzeichnet, dass** durch die mindestens eine Bildverarbeitungsvorrichtung (9) und gegebenenfalls weitere Bildverarbeitungsvorrichtungen die bestimmte Eigenschaft oder die bestimmten Eigenschaften klassifizierbar ist bzw. sind.

17. Verfahren zur Überwachung der Partikelfracht eines Fluids (12) wobei
das zu überwachende Fluid (12) über einen Einlauf (3) in eine Messkammer (2) und über einen Auslauf (4) wie der aus der Messkammer (2) geleitet wird,
**dadurch gekennzeichnet,**
**dass** das Fluid (12) durch ein in der Messkammer (2) zwischen dem Einlauf (3) und dem Auslauf (4) angeordnetes Partikelsieb (10) zum Zurückhalten von Partikeln (13a), deren Größe größer oder gleich einer vorbestimmten Mindestgröße ist, geleitet wird,
das Partikelsieb (10) beleuchtet wird, und
ein Abbild des beleuchteten Partikelsiebes (10) aufgenommen wird.

18. Verfahren nach dem vorhergehenden Anspruch, **dadurch gekennzeichnet, dass** das Abbild des Partikelsiebs (10) bei Beleuchtung im Auflicht (7a) und/oder im Durchlicht (7b) aufgenommen wird.

19. Verfahren nach einem der beiden vorhergehenden Ansprüche, **dadurch gekennzeichnet, dass** das Partikelsieb (10) mit farbigem sichtbarem Licht, ultraviolettem Licht und/oder polarisiertem Licht beleuchtet wird.

20. Verfahren nach einem der Ansprüche 17 bis 19, **dadurch gekennzeichnet, dass** ein digital speicherbares Bild des Partikelsiebes (10) aufgenommen wird.

21. Verfahren nach dem vorhergehenden Anspruch, **dadurch gekennzeichnet, dass** aus dem digital speicherbaren Bild Anzahl, Größe, Form, maximale Länge, maximale Breite, Verhältnis zwischen Breite und Länge, Rundheitsgrad, Farbe, Fluoreszenzeigenschaften, Polarisationseigenschaften und/oder Material der auf dem Partikelsieb (10) abgeschiedenen Partikel (13b) bestimmt wird.

22. Verfahren nach dem vorhergehenden Anspruch, **dadurch gekennzeichnet, dass** die bestimmte Eigenschaft oder die bestimmten Eigenschaften klassifiziert werden.

23. Verfahren nach einem der Ansprüche 17 bis 22, **dadurch gekennzeichnet, dass** zeitlich nacheinander ein erstes und ein zweites Abbild des Partikelsiebs (10) aufgenommen wird und aus der zeitliche Änderung der Helligkeit der beiden Abbilder zwischen dem ersten Abbild und dem zweiten Abbild ein Maß für die Änderung der Trübung des Fluides (12) bestimmt wird.

24. Verfahren nach einem der Ansprüche 17 bis 23 unter Verwendung einer Vorrichtung nach einem der Ansprüche 1 bis 16.

25. Verwendung einer Vorrichtung (1) und/oder eines Verfahrens nach einem der vorhergehenden Ansprüche zur Bestimmung der Partikelfracht von Flüssigkeiten oder Gasen, in der Fertigungs- und Produktionstechnik, bei der Prozessführung von Reinigungs- und/oder Spülbädern, bei der Qualitätsüberwachung von Reinigungsvorgängen, bei der Bestimmung der technischen Sauberkeit bzw. Partikelbeladung von Bauteilen, insbesondere in der Automobilindustrie.
